# FASCICULE DE BREVET EUROPEEN

(11) **EP 2 313 304 B1**
(45) Date de publication et mention de la délivrance du brevet: **30.11.2011**
(21) Numéro de dépôt: 09753975.3
(22) Date de dépôt: 29.05.2009
(51) Int. Cl.: B62D 57/032

(54) **ROBOT HUMANOIDE METTANT EN OEUVRE UNE ARTICULATION SPHERIQUE A ACTIONNEURS COUPLES**
EIN KUGELGELENK MIT GEKOPPELTEN AKTUATOREN IMPLEMENTIERENDER HUMANOIDROBOTER
HUMANOID ROBOT IMPLEMENTING A SPHERICAL HINGE WITH COUPLED ACTUATORS

(30) Priorité: 29.05.2008 FR 0853520
(43) Date de publication de la demande: 27.04.2011
(73) Titulaire: Bia, 78700 Conflans Ste Honorine (FR)
(72) Inventeur: ALFAYAD, Samer, F-92340 Bourg La Reine (FR); BEN OUEZDOU, Fathi, F-92340 Bourg La Reine (FR); NAMOUN, Fayçal, F-92400 Courbevoie (FR)
(74) Mandataire: Collet, Alain
(86) Numéro de dépôt international: PCT/EP2009/056678
(87) Numéro de publication internationale: WO 2009/144320

(56) Documents cités:
- EP-A1- 1 433 694
- JP-A- 2004 017 248
- JP-A- 2006 015 472
- LENARCIC J ET AL: "Kinematic design of a humanoid robotic shoulder complex" ROBOTICS AND AUTOMATION, 2000. PROCEEDINGS. ICRA '00. IEEE INTERNATION AL CONFERENCE ON, PISCATAWAY, NJ, USA,IEEE, vol. 1, 24 avril 2000 (2000-04-24), pages 27-32, XP010500195 ISBN: 978-0-7803-5886-7

## Description

L'invention concerne un robot humanoïde mettant en oeuvre une articulation sphérique à actionneurs couplés et un procédé mettant en oeuvre l'articulation. L'invention trouve une utilité particulière dans la réalisation de robots humanoïdes se rapprochant au mieux de l'anthropomorphie humaine. Par exemple, l'articulation sphérique selon l'invention peut être mise en oeuvre pour une hanche, une épaule ou une articulation entre un bassin et un tronc du robot.

Un modèle mathématique modélisant cette anthropomorphie a été développé dans les années 1960 aux Etats-Unis par Aerospace Medical Research Laboratories situé à Dayton, Ohio. Ce modèle, bien connu sous le nom de modèle de Hanavan, décrit de façon paramétrique, en rapport à une taille et masse humaines données, les dimensions de toutes les parties du corps. Par exemple, la hanche est décrite comme une articulation possédant trois degrés de liberté en rotation. Les dimensions de la hanche et des parties du corps l'entourant : bassin et cuisse sont également décrites. Par exemple, pour un adolescent de 14 ans, de taille 1,6 m et de masse 50kg, la cuisse peut être représentée par un cône tronqué de 392 mm de hauteur, de 46 mm pour le petit rayon et de 74 mm pour le grand rayon. Pour le même robot et en utilisant ce modèle, le bassin est représenté par un parallélépipède de 189 mm de hauteur, 230 mm de largeur, et 160 mm de profondeur. La distance entre les deux hanches est égale à deux fois le grand rayon de la cuisse. La hauteur de la cuisse est définie comme la distance entre l'articulation formée par le hanche et celle formée par le genou.

Un calcul dynamique, montre que pour réaliser une marche à une vitesse de 1,2 m/s, et toujours pour un robot de 1,6 m et 50kg, l'articulation de la hanche dans le plan sagittal nécessite un couple de l'ordre 45 N.m, avec une vitesse maximale de 2,7 rad/s, et un débattement articulaire de - 30° à +30°. Par contre dans le plan frontal l'articulation nécessite un couple de l'ordre 35 N.m, avec une vitesse maximale de l'ordre 1 rad/s, et un débattement articulaire de -5° à +10°.

A l'heure actuelle, de nombreux robots humanoïdes ont été développés, mais aucun ne respecte le modèle de Hanavan, notamment au niveau de l'encombrement de la jambe et de l'épaule. On trouve par exemple des robots dont la hanche est réduite à une articulation de type joint de cardan, c'est-à-dire ne comprenant que deux degrés de libertés, une rotation dans le plan sagittal et une rotation dans le plan frontal. De plus, les mécanismes d'actionnement utilisés pour motoriser ces deux degrés de libertés, en suivant les paramètres issus du calcul dynamique, sortent des dimensions prévues dans le modèle de Hanavan. On trouve également des robots dont le débattement angulaire de la hanche dans le plan sagittal du robot ne permet pas d'obtenir une longueur d'enjambée suffisante pour obtenir une vitesse de marche du robot semblable à celle d'un humain, tel que décrit dans le document EP 1 433 694 A1.

L'invention vise à améliorer la concordance entre la réalisation d'un robot et l'anatomie humaine, par exemple approchée par le modèle de Hanavan.

A cet effet, l'invention a pour objet un robot humanoïde comprenant une articulation sphérique à trois degrés de libertés en rotation reliant deux éléments du robot, l'articulation étant mue par trois actionneurs dont un premier et un second agissent en parallèles et sont couplés, et dont un troisième actionneur agit en série des deux premiers actionneurs autour d'un axe, caractérisé en ce que l'axe du troisième actionneur est l'axe dont le débattement angulaire doit être le plus important pour se rapprocher de l'anthropomorphie humaine.

L'invention a également pour objet un procédé d'actionnement d'un robot humanoïde dont l'articulation comprend deux vérins, le procédé étant caractérisé en ce que pour mouvoir l'articulation selon un premier axe de l'articulation, on agit simultanément sur les deux vérins dans le même sens et en ce que pour mouvoir l'articulation selon un second axe de l'articulation, on agit simultanément sur les deux vérins en sens opposé.

Dans le cas de la hanche, grâce à trois degrés de libertés, respectivement dans un plan frontal, un plan sagittal et un plan horizontal, la démarche d'un robot humanoïde mettant en oeuvre une hanche conforme à l'invention sera beaucoup plus anthropomorphique, notamment au niveau de son débattement angulaire important dans le plan sagittal. Le fait de coupler les actionneurs permettant les rotations autour d'un axe vertical et frontal permet de réduire le volume de l'articulation. En revanche ce couplage limite le débattement angulaire autour de l'axe considéré. Le troisième actionneur permettant la rotation autour d'un axe perpendiculaire au plan sagittal est conservé indépendant des deux autres ce qui permet de conserver un débattement angulaire important pour ce troisième actionneur. Dans l'invention, on fait le choix d'utiliser ce troisième actionneur indépendant pour le mouvement prépondérant de l'articulation, c'est-à-dire la rotation réclamant le plus grand débattement angulaire dans l'anthropomorphie humaine, par exemple telle qu'elle est définie dans le modèle de Hanavan.

L'invention sera mieux comprise et d'autres avantages apparaîtront à la lecture de la description détaillée d'un mode de réalisation donné à titre d'exemple, description illustrée par le dessin joint dans lequel :
La figure 1 représente en perspective un robot humanoïde comprenant plusieurs articulations sphériques conformes à l'invention ;
la figure 2 représente en perspective une hanche conforme à l'invention ;
la figure 3 représente la hanche en coupe dans un plan frontal;
la figure 4 représente en coupe un des actionneurs de la hanche;
la figure 5 représente en coupe un croisillon de la hanche ;
la figure 6 représente en coupe deux autres actionneurs de la hanche ;
la figure 7 représente en perspective une épaule conforme à l'invention ;
la figure 8 représente en coupe l'épaule de la figure 7 ;
la figure 9 représente en perspective une articulation conforme à l'invention entre un bassin et un tronc du robot ;
la figure 10 représente en coupe l'articulation de la figure 9.

Par souci de clarté, les mêmes éléments porteront les mêmes repères dans les différentes figures. Le dessin est donné à titre illustratif et les échelles n'y sont pas totalement respectées.

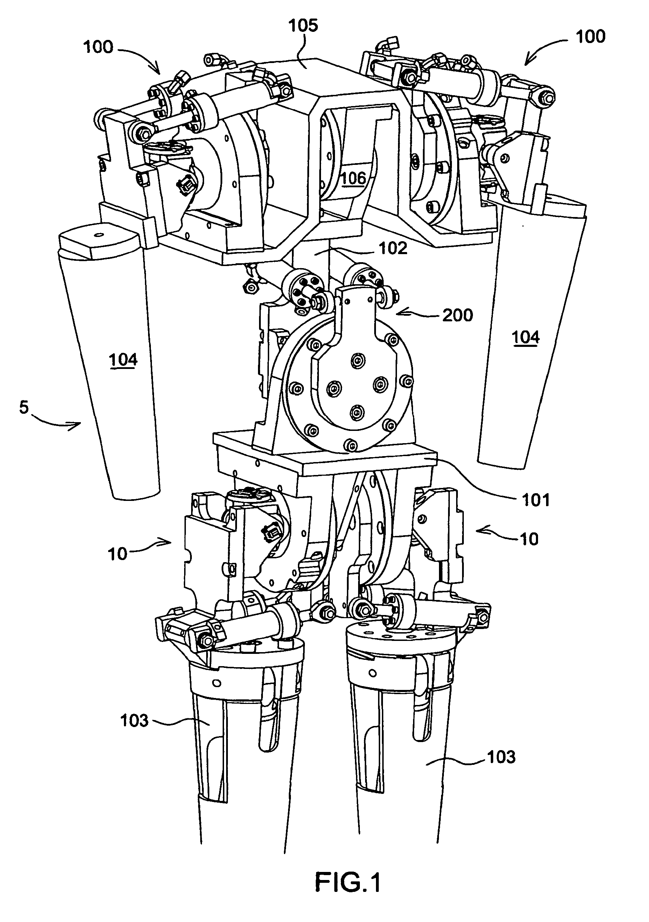

La figure 1 représente en perspective un robot humanoïde 5 comprenant plusieurs articulations sphériques conformes à l'invention dont deux hanches 10, deux épaules 100 et une articulation 200 entre un bassin 101 et un tronc 102 du robot 5. Chaque hanche 10 relie une cuisse 103 au bassin 101. Chaque épaule 100 relie un bras 104 à un torse 105 du robot 5. On peut disposer entre le tronc 102 et le torse 105 une articulation 106 à un degré de liberté en rotation autour d'un axe sagittal du robot 5. Par convention, on désigne par axe sagittal, un axe perpendiculaire au plan sagittal, plan vertical dans lequel le mouvement de marche du robot se fait principalement. De même, on désigne par axe frontal, un axe perpendiculaire au plan frontal du robot. Le plan frontal est vertical et perpendiculaire au plan sagittal. Enfin, on désigne par axe vertical, un axe formé par l'intersection entre le plan sagittal et le plan frontal.

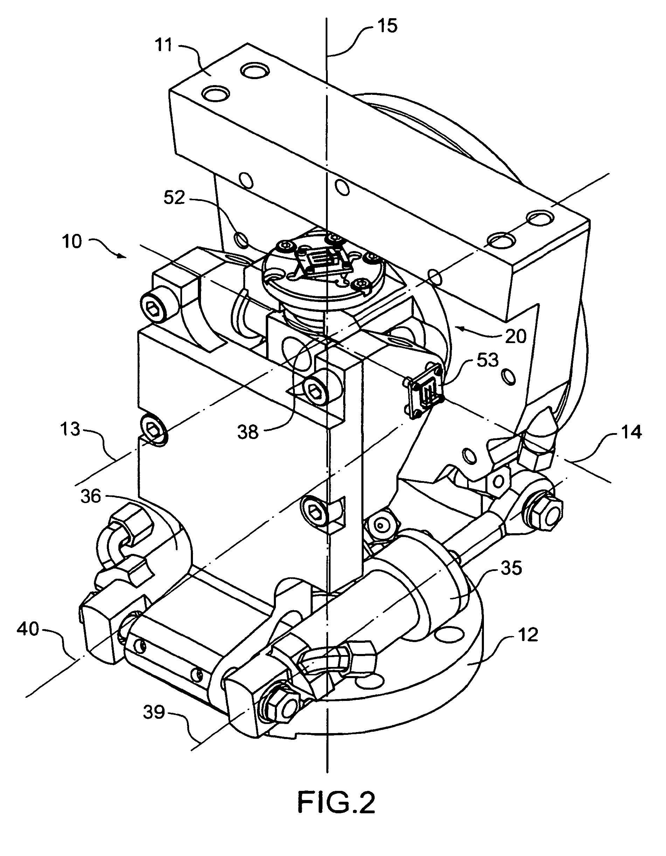

La figure 2 représente une hanche 10 conforme à l'invention. La hanche 10 comprend une première pièce d'interface 11 solidaire du bassin 101 et une seconde pièce d'interface 12 solidaire de la cuisse 103. Pour ne pas surcharger les différentes figures, ni le bassin, ni la cuisse ne sont représentés et seuls les éléments de la hanche 10 reliant les deux pièces d'interface 11 et 12 sont représentés.

La hanche 10 comporte trois actionneurs permettant chacun de mouvoir en rotation la cuisse par rapport au bassin autour d'un axe, les trois axes étant distincts. Plus précisément, dans l'exemple représenté, le premier axe 13 est un axe sagittal, le deuxième axe 14 est un axe frontal et le troisième axe 15 est vertical.

Les actionneurs peuvent utiliser de l'énergie hydraulique ou électrique.

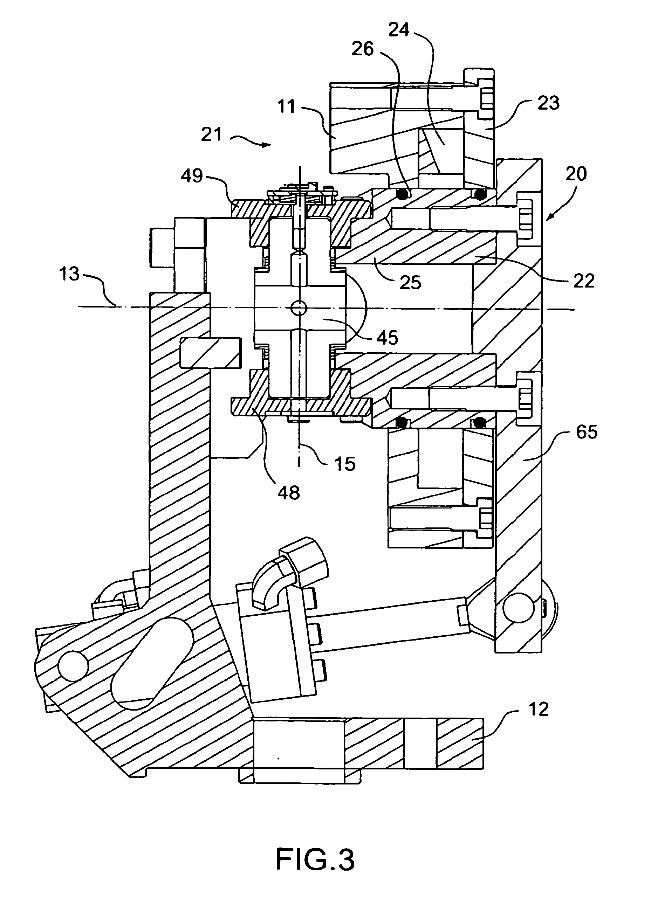

La figure 3 représente la hanche en coupe dans un plan frontal. Cette figure permet de mieux visualiser les actionneurs. L'actionneur permettant de mouvoir la hanche autour de l'axe sagittal 13 est un moteur rotatif hydraulique 20 comportant un stator 21 et un rotor 22. Le stator 21 est formé de la pièce d'interface 11 et d'une plaque de fermeture 23. Une gorge annulaire 24 est réalisée dans la pièce d'interface 11 et est fermée par la plaque 23.

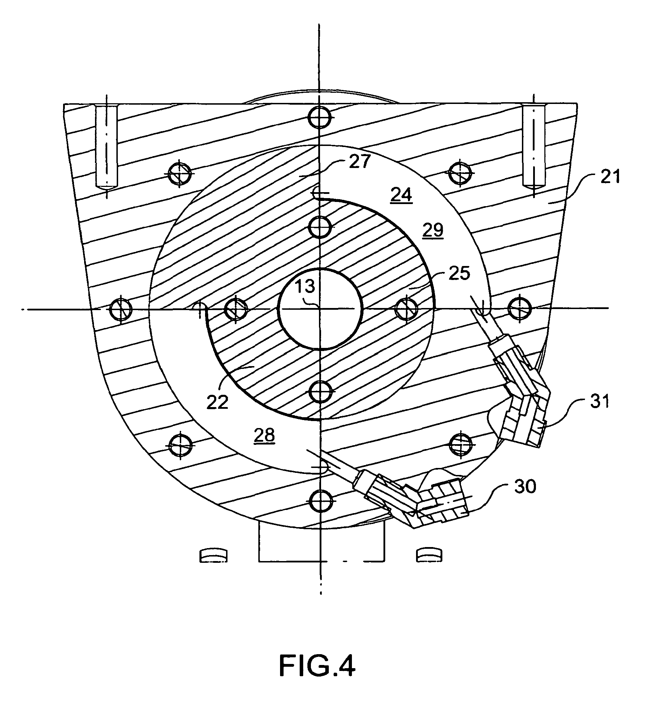

La figure 4 représente en coupe dans un plan vertical, passant par la gorge annulaire 24, le stator 21 et le rotor 22. La gorge annulaire 24 s'étend sur 270° autour de l'axe 13. Le rotor 22 comprend un arbre tubulaire 25 pouvant se déplacer en rotation dans un alésage 26 réalisé à la fois dans la pièce d'interface 11 et dans la plaque 23 Le rotor 22 comprend également un papillon 27 pouvant se déplacer dans la gorge 24. Le papillon 27 et l'arbre tubulaire 25 forment une seule pièce mécanique. L'alésage 26 s'étend selon l'axe sagittal 13. Le papillon 27 comble la gorge 24 suivant un arc de cercle de 90° autour de l'axe sagittal 13.

La différence de dimension angulaire entre le papillon 27 et la gorge 24 laisse subsister deux espaces libres de part et d'autre du papillon 27. Ces espaces forment deux chambres 28 et 29 dans lesquelles on peut acheminer un fluide hydraulique par l'intermédiaire de raccords, respectivement 30 et 31. Une différence de pression du fluide entre les deux chambres 28 et 29 permet de faire tourner le rotor 22 par rapport au stator 21. Cette différence de pression peut être générée par une pompe hydraulique installée à bord du robot. Pour améliorer l'indépendance des différents actionneurs entre eux, il est possible de prévoir une pompe dédiée à chaque actionneur. Les différentes pompes peuvent être logées dans la cuisse ou dans le bassin au plus près des actionneurs, afin de limiter la longueur des canalisations hydrauliques reliant chaque pompe à l'actionneur associé. Sur la figure 3, le rotor 22 est représenté en position centrale par rapport au stator 21 permettant un débattement de + ou - 90° par rapport à cette position centrale. D'autres dimensions angulaires pour le papillon 27 et la gorge 24 permettent d'accroitre ou de réduire, selon le besoin de l'articulation, l'amplitude du mouvement angulaire du rotor 22 par rapport au stator 21.

La hanche 10 comprend deux actionneurs 35 et 36 agissant en parallèle sur la cuisse. Ces deux actionneurs permettent la rotation de la cuisse autour de l'axe frontal 14 et de l'axe vertical 15. Cette action en parallèle permet d'éviter que l'un des actionneurs ne supporte l'autre. Il est par exemple possible de réaliser une articulation motorisée à trois degrés de liberté en rotation à partir de trois moteurs rotatifs assemblés en série. Plus précisément le rotor d'un moteur est solidaire du stator du moteur qui le suit dans la chaîne cinématique. Cette conception, prévoyant des actionneurs en série, impose de dimensionner l'actionneur amont dans la chaîne cinématique pour qu'il soit capable de supporter la charge de l'actionneur aval en plus de la charge de l'objet à déplacer, en l'occurrence la cuisse. Une hanche conforme à l'invention prévoit que deux au moins des trois actionneurs agissent en parallèle. Autrement dit, les deux actionneurs agissent directement, entre les éléments à déplacer, sans passer par l'autre actionneur. Un quelconque des actionneurs en parallèle ne supporte pas la charge induite par l'autre actionneur, mais seulement celle engendrée l'objet à déplacer, ce qui permet de réduire ses dimensions. Dans l'exemple décrit, la hanche 10 comprend deux actionneurs agissant en parallèle.

A cet effet, la hanche 10 comprend une liaison 37 à deux degrés de liberté en rotation selon des axes sécants, l'axe frontal 14 et l'axe vertical 15. La liaison 37 peut s'apparenter à une liaison de type joint de cardan. Le point d'intersection des deux axes 14 et 15 porte le repère 38. La liaison 37 relie deux éléments que sont, dans l'exemple représenté, le rotor 22 et la pièce d'interface 12. La motorisation de la liaison 37 est réalisée au moyen des deux actionneurs 35 et 36 qui sont formés chacun d'un vérin linéaire disposé entre le rotor 22 et la pièce d'interface 12. Chaque vérin 35 et 36 permet un déplacement selon un axe, respectivement 39 et 40. Le point d'intersection 38 des axes 14 et 15 n'est pas situé sur les axes des vérins afin qu'une action sur les vérins puisse mouvoir la liaison 37. Dans l'exemple décrit, la liaison 37 et sa motorisation sont portées par le rotor 22. Autrement dit, la liaison 37 est en aval du moteur 20 dans la chaîne cinématique de la hanche 10. Il est également possible de prévoir une liaison motorisée à deux degrés de liberté en amont du moteur 20.

Avantageusement, la liaison 37 comprend un croisillon 45 pouvant pivoter autour d'un axe de la liaison 37 par rapport à un premier des deux éléments et autour de l'autre axe de la liaison 37 par rapport à un second des deux éléments. Dans l'exemple représenté, le croisillon 45 peut pivoter autour de l'axe vertical 15 par rapport au rotor 22 et autour de l'axe frontal 14 par rapport à la pièce d'interface 12 solidaire de la cuisse.

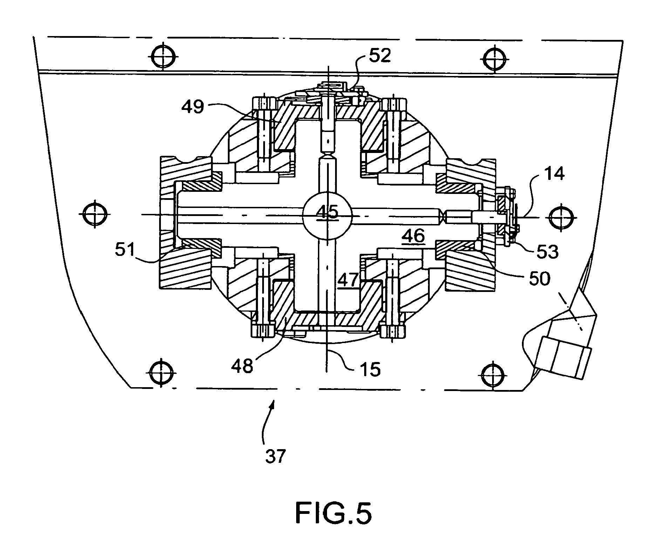

La figure 5 représente en coupe la liaison 37 dans un plan contenant les axes 14 et 15. Le croisillon 45 est formé de deux arbres 46 et 47 solidaires et perpendiculaires. L'arbre 46 s'étend suivant l'axe frontal 14 et l'arbre 47 s'étend suivant l'axe vertical 15. Deux paliers 48 et 49 permettent la rotation de l'arbre 47 par rapport au rotor 22 et deux paliers 50 et 51 permettent la rotation de l'arbre 46 par rapport à la pièce d'interface 12. Pour connaître le déplacement angulaire de la hanche 10 selon les axes 14 et 15, on peut disposer dans chacun des paliers 49 et 50, un potentiomètre, respectivement 52 et 53, délivrant une information électrique fonction de la position angulaire du croisillon 45 par rapport au rotor 22 et à la pièce d'interface 12, potentiomètre qui servira au pilotage de la liaison 37 par un dispositif de commande (non représenté). Il est également possible d'équiper le moteur rotatif 20 d'un potentiomètre permettant de connaître la position angulaire de la cuisse autour de l'axe sagittal 13.

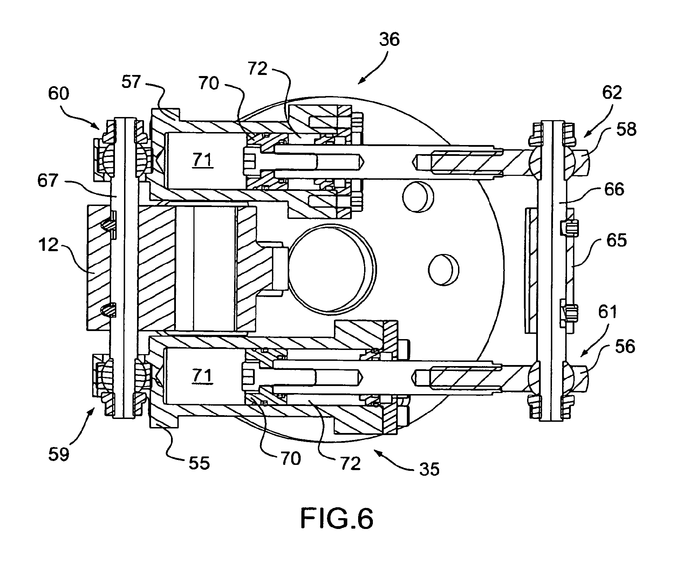

Les axes 39 et 40 des deux vérins linéaires 35 et 36 sont avantageusement parallèles entre eux. Il est bien entendu que ce parallélisme n'existe que dans une position particulière de la liaison 37, par exemple la position dans laquelle un robot équipé de la hanche 10 serait debout en équilibre sans marcher. La figure 6 est une vue en coupe de la hanche 10 dans un plan contenant les axes des vérins 35 et 36 lorsque ceux-ci sont parallèles. Les axes 39 et 40 peuvent être sensiblement parallèles à l'axe sagittal 13. Les vérins 35 et 36 sont par exemple hydrauliques à double effet. Chaque vérin possède deux extrémités 55 et 56 pour le vérin 35 ainsi que 57 et 58 pour le vérin 36. Pour permettre l'indépendance du mouvement des deux vérins, les extrémités 55 et 57 sont reliées chacun à la pièce d'interface 12 par l'intermédiaire d'une rotule, respectivement 59 et 60. De même, les extrémités 56 et 58 sont reliées chacun au rotor 22 par l'intermédiaire d'une rotule, respectivement 61 et 62.

La liaison des vérins 35 et 36 au rotor 22 peut se faire au moyen d'une plaque 65 solidaire de l'arbre tubulaire 25 du rotor 22. La plaque 65 s'étend dans un plan sagittal. Une tige 66 est solidaire en son milieu du bas de la plaque 65. Les rotules 61 et 62 sont disposées aux extrémités de la tige 66 de part et d'autre de la plaque 65. De même, une tige 67 est solidaire de la pièce d'interface 12 et les rotules 59 et 60 sont disposées aux extrémités de la tige 67 de part et d'autre de la pièce d'interface 12.

Les vérins 35 et 36 sont avantageusement hydrauliques. Ils comprennent alors chacun un piston 70 séparant deux chambres 71 et 72 des vérins. Comme pour le moteur rotatif 20, les chambres 71 et 72 sont alimentées par une différence de pression d'un fluide hydraulique.

Lorsque les deux vérins 35 et 36 sont actionnés dans le même sens, par exemple lorsque d'une part les extrémités 57 et 58 du vérin 36 et d'autre part les extrémités 55 et 56 du vérin 35 se rapprochent simultanément, la pièce d'interface 12 tourne par rapport au rotor 22 autour de l'axe frontal 14. Au contraire, Lorsque les deux vérins 35 et 36 sont actionnés simultanément en sens opposé, la pièce d'interface 12 tourne par rapport au rotor 22 autour de l'axe vertical 15.

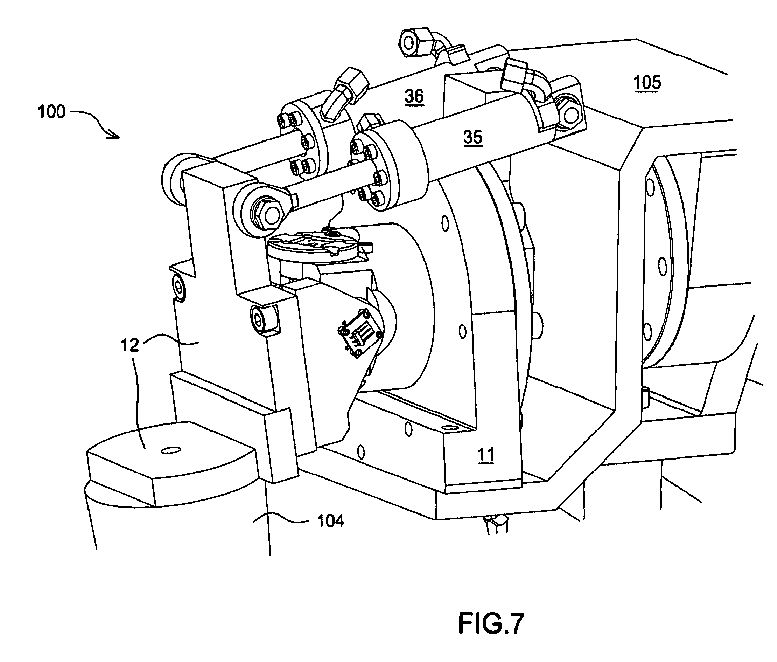

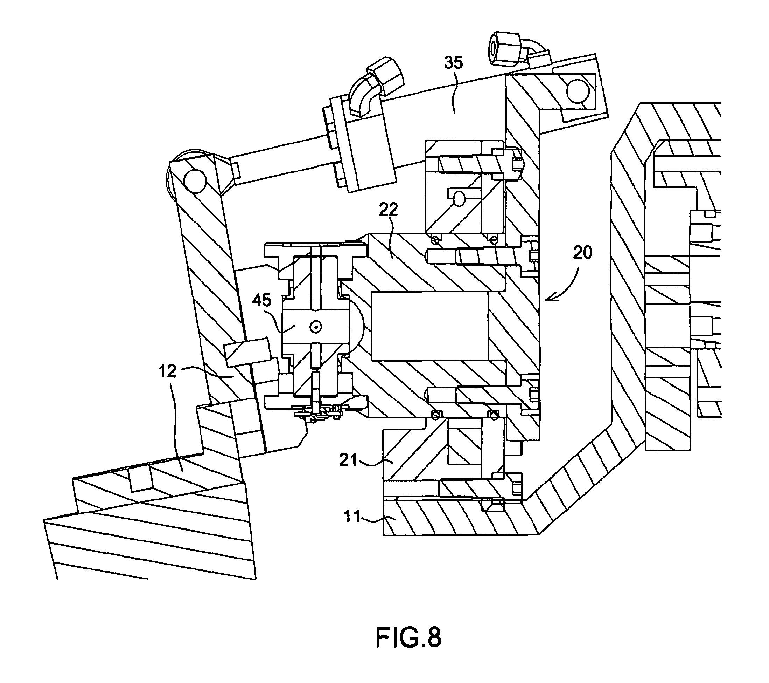

Les figures 7 et 8 représentent une épaule 100 conforme à l'invention. La figure 7 est une vue en perspective de l'épaule 100 et la figure 8 est une vue en coupe. L'épaule 100 relie le torse 105 et un bras 104. La pièce d'interface 11 est solidaire du torse 105 et la pièce d'interface 12 est solidaire du bras 104.

Dans l'épaule 100, on retrouve l'actionneur 20 sous forme d'un moteur hydraulique permettant la rotation du bras autour de l'axe sagittal du robot 5. On retrouve également les deux actionneurs 35 et 36 permettant la rotation du bras 104 autour de l'axe frontal et de l'axe vertical du robot 5. Les deux actionneurs 35 et 36 sont couplés et l'actionneur 20 est indépendant des deux autres permettant ainsi un grand débattement angulaire du bras dans le plan sagittal. Ce mouvement de rotation est par exemple celui qui est prépondérant lorsque le robot 5 marche pour équilibrer son corps.

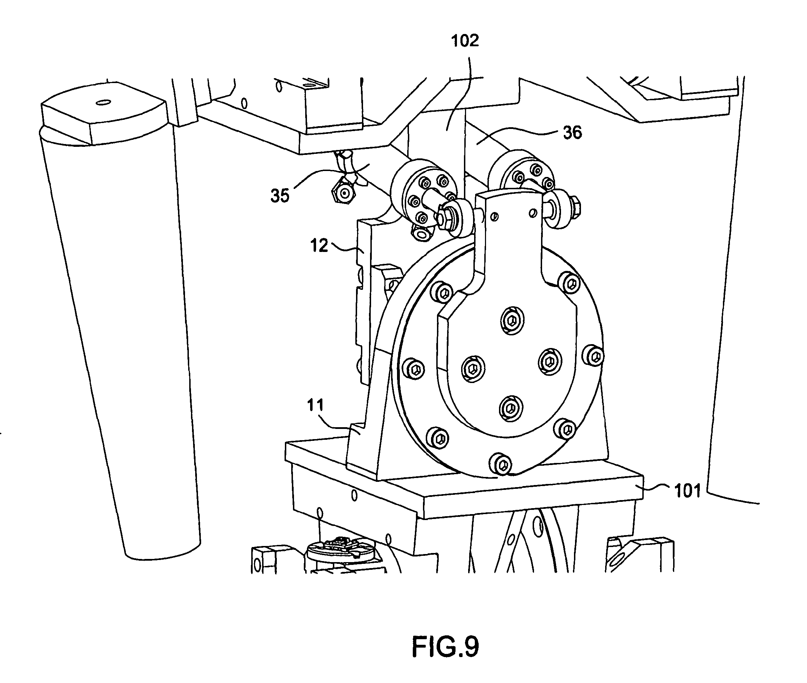

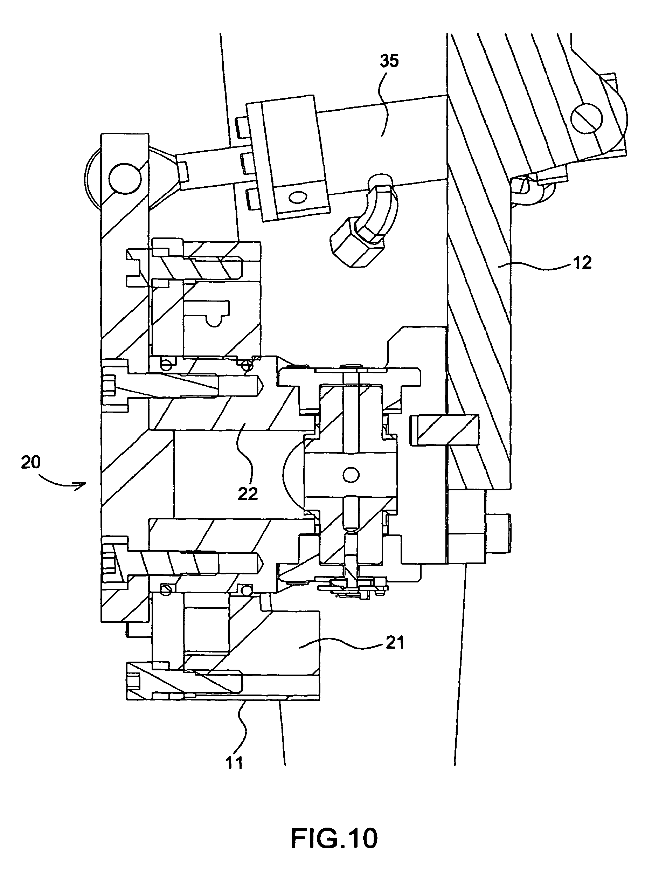

Les figures 9 et 10 représentent une articulation 200 entre le bassin 101 et le tronc 102 du robot 5. La figure 9 est une vue en perspective de l'épaule 100 et la figure 10 est une vue en coupe. La pièce d'interface 11 est solidaire du bassin 101 et la pièce d'interface 12 est solidaire du tronc 102.

Dans L'articulation 200, on retrouve l'actionneur 20 sous forme d'un moteur hydraulique permettant la rotation du tronc 102 autour de l'axe frontal du robot 5. On retrouve également les deux actionneurs 35 et 36 permettant la rotation du tronc 102 autour de l'axe sagittal et de l'axe vertical du robot 5. Les deux actionneurs 35 et 36 sont couplés et l'actionneur 20 est indépendant des deux autres permettant ainsi un grand débattement angulaire du tronc 102 dans le plan frontal. Ce débattement contribue à augmenter l'espace latéral de travail du robot 5. Autrement dit, lorsque le robot 5 conserve les pieds au sol sans se déplacer, son envergure de travail des mains est augmentée du fait de ce débattement du tronc dans le plan frontal.

Dans les trois exemples d'articulation décrits précédemment, le stator 21 de l'actionneur 20 est avantageusement solidaire de l'élément du robot 5 le plus amont par rapport au centre de gravité du robot 5. Pour la hanche, l'élément le plus amont est le bassin 101, pour l'épaule 100, l'élément le plus amont est le torse 105 et pour l'articulation 200, l'élément le plus amont est le bassin 101. On considère que le centre de gravité du robot 5 est situé sensiblement dans son bassin 101. Plus généralement, exprimé de façon cinématique, dans une articulation à trois axes de rotation, on a un axe qui supporte les deux autres. L'actionneur 20 supporte les deux autres actionneurs 35 et 36.

## Revendications

1. Robot humanoïde comprenant une articulation (10, 100, 200) sphérique à trois degrés de libertés en rotation selon trois axes (13, 14, 15) reliant deux éléments (101, 103 ; 105, 104 ; 101, 102) du robot (5), l'articulation étant mue par trois actionneurs (20, 35, 36) dont un premier (35) et un second (36) agissent en parallèles et sont couplés, et dont un troisième actionneur (20) agit en série des deux premiers actionneurs autour d'un premier des axes (13), **caractérisé en ce que** l'axe (13) du troisième actionneur (20) est l'axe (13) dont le débattement angulaire doit être le plus important pour se rapprocher de l'anthropomorphie humaine.

2. Robot humanoïde selon la revendication 1, **caractérisé en ce qu'**il comprend deux éléments (12, 22) reliés par une liaison (37) à deux degrés de liberté en rotation selon les second et troisième axes (14, 15) sécants en un point (38) et mue par le premier et le second actionneur (35, 36), **en ce que** les deux actionneurs (35, 36) agissant en parallèles sont formés chacun d'un vérin linéaire (35, 36) disposé entre les deux éléments (12, 22) reliés par la liaison (37), chaque vérin (35, 36) se déplaçant selon un axe (39, 40) et **en ce que** le point d'intersection (38) des axes (14, 15) de la liaison (37) n'est pas situé sur les axes (39, 40) des vérins (35, 36).

3. Robot humanoïde selon la revendication 2, **caractérisé en ce que** la liaison (37) comprend un croisillon (45) pouvant pivoter autour d'un axe (15) de la liaison (37) par rapport à un premier (22) des deux éléments reliés par la liaison (37) et autour de l'autre axe (14) de la liaison (37) par rapport à un second (12) de ces deux éléments.

4. Robot humanoïde selon l'une des revendications 2 ou 3, **caractérisé en ce que** les axes (39, 40) des deux vérins linéaires (35, 36) sont parallèles.

5. Robot humanoïde selon l'une des revendications précédentes, **caractérisé en ce que** le troisième actionneur est un moteur rotatif (20) comportant un stator (21) et un rotor (22), le moteur (20) actionnant l'articulation (10).

6. Robot humanoïde selon l'une des revendications précédentes, **caractérisé en ce que** le troisième actionneur (20) comprend un stator (21) et un rotor, et **en ce que** le stator (21) est solidaire de l'élément (101, 105) du robot (5) le plus amont par rapport au centre de gravité du robot (5).

7. Robot humanoïde selon l'une des revendications précédentes, **caractérisé en ce que** les actionneurs (20, 35, 36) utilisent de l'énergie hydraulique.

8. Robot humanoïde selon l'une des revendications précédentes, **caractérisé en ce que** l'articulation est une hanche (10), **en ce que** le premier élément est une cuisse (103) et le second élément est un bassin (101), **en ce que** le premier axe (13) est un axe sagittal, le deuxième axe (14) est un axe frontal et le troisième axe (15) est un axe vertical et **en ce que** les deux premiers actionneurs (35, 36) permettant la rotation autour de l'axe frontal (14) et de l'axe vertical (15) agissent en parallèle sur la cuisse (103).

9. Robot humanoïde selon l'une des revendications précédentes, **caractérisé en ce que** l'articulation est une épaule (100), **en ce que** le premier élément est un bras (104) et le second élément est un torse (105), **en ce que** le premier axe (13) est un axe sagittal, le deuxième axe (14) est un axe frontal et le troisième axe (15) est un axe vertical et **en ce que** les deux premiers actionneurs (35, 36) permettant la rotation autour de l'axe frontal (14) et de l'axe vertical (15) agissent en parallèle sur le bras (104).

10. Robot humanoïde selon l'une des revendications précédentes, **caractérisé en ce que** le premier élément est un bassin (101) et le second élément est un tronc (102), **en ce que** le premier axe (13) est un axe frontal, le deuxième axe (14) est un axe sagittal et le troisième axe (15) est un axe vertical et **en ce que** les deux premiers actionneurs (35, 36) permettant la rotation autour de l'axe sagittal (14) et de l'axe vertical (15) agissent en parallèle sur le tronc (102).

11. Procédé d'actionnement d'un robot humanoïde selon l'une des revendications 2 à 9 en tant que revendication dépendante de la revendication 2, **caractérisé en ce que** pour mouvoir l'articulation (10, 100, 200) selon un premier axe (14) de la liaison (37), on agit simultanément sur les deux vérins (35, 36) dans le même sens et **en ce que** pour mouvoir l'articulation (10, 100, 200) selon un second axe (15) de la liaison (37), on agit simultanément sur les deux vérins (35, 36) en sens opposé.

## Claims

1. A humanoid robot comprising a spherical joint (10, 100, 200) with three degrees of freedom in rotation along three axes (13, 14, 15) connecting two members (101, 103; 105, 104; 101, 102) of said robot (5), said joint being moved by three actuators (20, 35, 36), a first (35) and a second (36) of which acting parallel and are coupled together, and a third actuator (20) of which acts in series with said two first actuators around a first axis (13), **characterised in that** said axis (13) of said third actuator (20) is the axis (13) for which the angular range of movement must be the greatest so as to resemble human anthropomorphism.

2. The humanoid robot according to claim 1, **characterised in that** it comprises two elements (12, 22) connected by a link (37) having two degrees of freedom in rotation along the second and third axes (14, 15) intersecting at a point (38) and moved by first and the second actuators (35, 36), **in that** said two actuators (35, 36) acting in parallel are each formed as a linear cylinder (35, 36) arranged between the two elements (12, 22) connected by said link (37), each cylinder (35, 36) moving along an axis (39, 40), and **in that** the point of intersection (38) of the axes (14, 15) of said link (37) is not located on the axes (39, 40) of said cylinders (35, 36).

3. The humanoid robot according to claim 2, **characterised in that** the link (37) comprises a cross-piece (45) designed to pivot around an axis (15) of said link (37) relative to a first (22) of the two elements connected by said link (37) and around the other axis (14) of said link (37) relative to a second (12) of said two elements.

4. The humanoid robot according to claim 2 or 3 **characterised in that** the axes (39, 40) of the two linear cylinders (35, 36) are parallel.

5. The humanoid robot according to anyone of the preceding claims, **characterised in that** the third actuator is a rotary motor (20) comprising a stator (21) and a rotor (22), said motor (20) actuating the joint (10).

6. The humanoid robot according to anyone of the preceding claims **characterised in that** the third actuator (20) comprises a stator (21) and a rotor, and **in that** the stator (21) is integral with the member (101, 105) of the robot (5) that is farthest upstream relative to the centre of gravity of the robot (5).

7. The humanoid robot according to any one of the preceding claims **characterised in that** the actuators (20, 35, 36) use hydraulic energy.

8. The humanoid robot according to anyone of the preceding claims, **characterised in that** the joint is a hip (10), **in that** the first member is a thigh (103) and the second member is a pelvis (101), **in that** the first axis (13) is a capital axis, the second axis (14) is a frontal axis and the third axis (15) is a vertical axis and **in that** the two first actuators (35, 36) allowing rotation around the frontal axis (14) and the vertical axis (15) act in parallel on the thigh (103).

9. The humanoid robot according to anyone of the preceding claims, **characterised in that** the joint is a shoulder (100), **in that** the first member is an arm (104) and the second member is a torso (105), **in that** the first axis (13) is a capital axis, the second axis (14) is a frontal axis and the third axis (15) is a vertical axis and **in that** the two first actuators (35, 36) allowing rotation around the frontal axis (14) and the vertical axis (15) act in parallel on the arm (104).

10. The humanoid robot according to anyone of the preceding claims, **characterised in that** the first member is a pelvis (101) and the second member is a trunk (102), **in that** the first axis (13) is a frontal axis, the second axis (14) is a capital axis and the third axis (15) is a vertical axis and **in that** the two first actuators (35, 36) allowing rotation around the capital axis (14) and the vertical axis (15) act in parallel on the trunk (102).

11. A method for actuating a humanoid robot according to anyone of claims 2 to 9 as dependent on claim 2, **characterised in that** in order to move the joint (10, 100, 200) along a first axis (14) of the link (37), two cylinders (35, 36) are simultaneously acted upon in the same direction, and **in that** in order to move the joint (10, 100, 200) along a second axis (15) of the link (37), said two cylinders (35, 36) are simultaneously acted upon in the opposite direction.

## Patentansprüche

1. Humanoidroboter mit einem Kugelgelenk (10, 100, 200) mit drei Freiheitsgraden bei Rotation um drei Achsen (13, 14, 15), die zwei Elemente (101, 103; 105, 104; 101, 102) des Roboters (5) verbinden, wobei das Gelenk von drei Aktuatoren (20, 35, 36) bewegt wird, von denen ein erster (35) und ein zweiter (36) parallel wirken und miteinander gekoppelt sind und von denen ein dritter Aktuator (20) in Reihe mit den zwei ersten Aktuatoren um eine erste Achse (13) wirkt, **dadurch gekennzeichnet, dass** die Achse (13) des dritten Aktuators (20) die Achse (13) ist, für die der winkelmäßige Bewegungsbereich der größte sein muss, damit er einem menschlichen Anthropomorphismus ähnelt.

2. Humanoidroboter nach Anspruch 1, **dadurch gekennzeichnet, dass** er zwei Elemente (12, 22) umfasst, die durch ein Verbindungsglied (37) mit zwei Freiheitsgraden bei Rotation um die zweite und dritte Achse (14, 15) verbunden sind, die sich in einem Punkt (38) schneiden, und das vom ersten und vom zweiten Aktuator (35, 36) bewegt wird, dadurch, dass die beiden parallel wirkenden Aktuatoren (35, 36) jeweils von einem linearen Zylinder (35, 36) gebildet werden, der zwischen den beiden durch das Verbindungsglied (37) verbundenen Elementen (12, 22) angeordnet ist, wobei sich jeder Zylinder (35, 36) entlang einer Achse (39, 40) bewegt, und dadurch, dass sich der Schnittpunkt (38) der Achsen (14, 15) des Verbindungsgliedes (37) nicht auf den Achsen (39, 40) der Zylinder (35, 36) befindet.

3. Humanoidroboter nach Anspruch 2, **dadurch gekennzeichnet, dass** das Verbindungsglied (37) ein Kreuzstück (45) umfasst, das um eine Achse (15) des Verbindungsgliedes (37) relativ zu einem ersten (22) der beiden durch das Verbindungsglied (37) verbundenen Elemente und um die andere Achse (14) des Verbindungsgliedes (37) relativ zu einem zweiten (12) dieser beiden Elemente schwenkt.

4. Humanoidroboter nach einem der Ansprüche 2 bis 3, **dadurch gekennzeichnet, dass** die Achsen (39, 40) der beiden linearen Zylinder (35, 36) parallel sind.

5. Humanoidroboter nach einem der vorherigen Ansprüche, **dadurch gekennzeichnet, dass** der dritte Aktuator ein Drehmotor (20) mit einem Stator (21) und einem Rotor (22) ist, wobei der Motor (20) das Gelenk (10) betätigt.

6. Humanoidroboter nach einem der vorherigen Ansprüche, **dadurch gekennzeichnet, dass** der dritte Aktuator (20) einen Stator (21) und einen Rotor umfasst, und dadurch, dass der Stator (21) fest mit dem Element (101, 105) des Roboters (5) verbunden ist, das sich am weitesten oberhalb des Schwerpunkts des Roboters (5) befindet.

7. Humanoidroboter nach einem der vorherigen Ansprüche, **dadurch gekennzeichnet, dass** die Aktuatoren (20, 35, 36) Hydraulikenergie verwenden.

8. Humanoidroboter nach einem der vorherigen Ansprüche, **dadurch gekennzeichnet, dass** das Gelenk eine Hüfte (10) ist, dadurch, dass das erste Element ein Oberschenkel (103) und das zweite Element ein Becken (101) ist, dadurch, dass die erste Achse (13) eine Sagitallachse ist, die zweite Achse (14) eine Frontalachse und die dritte Achse (15) eine Vertikalachse ist, und dadurch, dass es die beiden ersten Aktuatoren (35, 36) zulassen, dass eine Rotation um die Frontalachse (14) und die Vertikalachse (15) parallel auf den Oberschenkel (103) wirkt.

9. Humanoidroboter nach einem der vorherigen Ansprüche, **dadurch gekennzeichnet, dass** das Gelenk eine Schulter (100) ist, dadurch, dass das erste Element ein Arm (104) und das zweite Element ein Torso (105) ist, dadurch, dass die erste Achse (13) eine Sagitallachse ist, die zweite Achse (14) eine Frontalachse und die dritte Achse (15) eine Vertikalachse ist, und dadurch, dass es die beiden ersten Aktuatoren (35, 36) zulassen, dass eine Rotation um die Frontalachse (14) und die Vertikalachse (15) parallel auf den Arm (104) wirkt.

10. Humanoidroboter nach einem der vorherigen Ansprüche, **dadurch gekennzeichnet, dass** das erste Element ein Becken (101) und das zweite Element ein Rumpf (102) ist, dadurch, dass die erste Achse (13) eine Frontalachse, die zweite Achse (14) eine Sagitallachse und die dritte Achse (15) eine Vertikalachse ist, und dadurch, dass es die beiden ersten Aktuatoren (35, 36) zulassen, dass eine Rotation um die Sagitallachse (14) und die Vertikalachse (15) parallel auf den Rumpf (102) wirkt.

11. Verfahren zum Betätigen eines Humanoidroboters nach einem der Ansprüche 2 bis 9 in Abhängigkeit von Anspruch 2, **dadurch gekennzeichnet, dass** zum Bewegen des Gelenks (10, 100, 200) entlang einer ersten Achse (14) des Verbindungsgliedes (37) gleichzeitig auf die zwei Zylinder (35, 36) in derselben Richtung gewirkt wird, und dadurch, dass zum Bewegen des Gelenks (10, 100, 200) entlang einer zweiten Achse (15) des Verbindungsglieds (37) gleichzeitig auf die zwei Zylinder (35, 36) in der entgegengesetzten Richtung gewirkt wird.
